# EUROPEAN PATENT APPLICATION

(11) **EP 4 667 866 A2**
(43) Date of publication of application: **24.12.2025**
(21) Application number: 25213250.1
(22) Date of filing: 04.11.2025
(51) Int. Cl.: G01B 11/00, G01B 11/16, G01B 11/30

(54) **DETERMINING GEOMETRIC PROPERTIES AS WELL AS DETERMINING MATERIAL PROPERTIES OF A SAMPLE**

(71) Applicant: ASML Netherlands B.V., 5500 AH Veldhoven (NL)
(72) Inventor: VON FINCK, Alexander, 5500 AH Veldhoven (NL); TRAVKIN, Evgenij, 5500 AH Veldhoven (NL)
(74) Representative: ASML Netherlands B.V.

(57) **Abstract**

An apparatus configured for determining geometric surface properties and for determining material properties of a same measuring region of a sample to be investigated, the apparatus comprising an illumination device arranged for illuminating a measuring region of the sample, an elastic camera system for determining the geometric surface properties of said sample in the measuring region by capturing light elastically scattered from the sample in the measuring region, an inelastic camera system for determining material properties of the sample in the measuring region by capturing light inelastically scattered from the sample in the measuring region and optics arranged to guide light elastically and inelastically scattered from the sample in the measuring region to the elastic camera system and the inelastic camera system, respectively.

## Description

### FIELD

The present disclosure relates to a measuring apparatus for determining geometric properties of a sample and for determining material properties of the sample and, more particularly, to a measuring apparatus for determining these properties of a structured surface, such as burls of holding apparatuses for wafers.

### BACKGROUND

Raman spectroscopy is a non-invasive optical technique for material characterization, particularly well-suited for analyzing surface materials and coatings such as Si, SiSiC, diamond, and Diamon-Like Carbon (DLC). It enables the identification of material composition, contamination, and certain mechanical or structural properties by detecting inelastically scattered light.

Inelastic scattering, as observed in Raman analysis, occurs when incident photons interact with molecular vibrations, resulting in scattered photons with energies different from the original excitation energy. This energy difference, known as the Raman shift, provides insight into vibrational states and thus e.g. the molecular structure, crystallinity, residual stress, and thermal conductivity of the sample. Raman spectrometers typically use a focused laser beam with a spot size around 1 µm to excite the sample, and the scattered light is analyzed using a dispersive spectrometer equipped with a grating and Charge-Coupled Device, CCD, CCD detector.

Due to the inherently low intensity of Raman-scattered light, i.e. much weaker than elastically scattered light, long integration times 'may be required for area scans. Consequently, full-area scans of large components, such as, for example, electrostatic clamps, ESCs, for holding wafers, become impractically time-consuming using conventional Raman systems.

In contrast, elastic light scattering, where the energy of the scattered photons remains unchanged after the scattering event, may be used for surface roughness and defect analysis. This is for example performed for relatively large surfaces like ESCs, wafer tables, WTs, and mirror blocks used in exposure apparatuses.

A known system illuminates the sample from multiple angles and captures scattered light with a camera, enabling roughness quantification through physical models such as Rayleigh-Rice vector perturbation theory. With a field of view of e.g. 15×15 mm² and a resolution of 5 µm, entire clamps can be scanned in under two hours.

Despite their strengths, both Raman and light scattering techniques thus face significant limitations. State-of-the-art Raman instruments are far too slow for full-area analysis of most samples at microscopic resolution. A single measurement position typically requires multiple seconds, for example tens of seconds, depending on the material. Since the laser beam may be focused to a spot size of approximately 1-10 µm, only a tiny portion of the sample is analysed per point. However, scanning an entire surface of an electrostatic clamp at 5 µm resolution would take several years. Additionally, surface roughness may affect both the intensity and frequency of Raman scattering, requiring high spectral resolution to attempt a discrimination between roughness-induced effects and genuine material signals. This need for precision prevents meaningful reductions in measurement time through spectral simplification.

Light scattering instruments, while fast and effective for detecting small particles and quantifying roughness, may be inadequate for identifying the material composition of contaminants. Scattered light from surface roughness can be superimposed by light from contamination, leading to misinterpretation of the signal and overestimation of surface roughness. This is particularly problematic in burl inspection of electrostatic clamps, where high roughness is typically desired for optimal wafer load grid, WLG, performance. In such cases, a clamp with contamination may be incorrectly classified as in-spec.

### SUMMARY

It would be advantageous to achieve an apparatus which is configured for determining geometric properties of a sample and for determining material properties of the same sample. It would further be advantageous to achieve a corresponding method.

In a first aspect of the present disclosure, there is provided an apparatus configured for determining geometric properties and for determining material properties of a same measuring region of a sample to be investigated. The apparatus comprises an illumination device arranged for illuminating a measuring region of the sample. The apparatus further comprises an elastic camera system and an inelastic camera system. The elastic camera system is used for determining the geometric properties of said sample in the measuring region by capturing light elastically scattered from the sample in the measuring region. The inelastic camera system is used for determining material properties of the sample in the measuring region by capturing light inelastically scattered from the sample in the measuring region. The apparatus further comprises optics arranged to guide light elastically and inelastically scattered from the sample in the measuring region to the elastic camera system and the inelastic camera system, respectively.

Furthermore, the elastic camera system is arranged for using the determined material properties of the sample in the measuring region in determining the geometric properties of the sample in the same measuring region and/or the inelastic camera system is arranged for using the determined geometric properties of the sample in the measuring region in determining the material properties of the sample in the same measuring region.

The inventors have found that it is beneficial to incorporate both an elastic camera system and an inelastic camera system, wherein both camera systems operate on a same region and wherein an outcome of the elastic camera system is used by the inelastic camera system, or vice versa. This is beneficial as this may increase the accuracy and/or speed of the determined geometric properties of the measuring region of the sample and/or may increase the accuracy and/or speed of the determined material properties of the same measuring region.

The apparatus thus enables the simultaneous determination of both surface characteristics and material properties within the same measuring region of a sample. This system comprises an illumination device designed to illuminate a defined region of the sample under investigation. The apparatus comprises two optical subsystems: an elastic camera system and an inelastic camera system.

The elastic camera system captures light that is elastically scattered, i.e. light that retains its original energy after interacting with the sample surface, and uses this information to determine geometric properties. In parallel, the inelastic camera system captures light that is inelastically scattered, meaning the light has undergone an energy shift due to interactions with molecular vibrations or other internal material features. This inelastic signal is used to determine material-specific properties such as composition, crystallinity, or stress states.

To facilitate this dual-functionality, the apparatus is equipped with optical components that guide both types of scattered light, elastic and inelastic, from the illuminated measuring region to their respective camera systems. This ensures that both surface and material analyses are performed on the same spatial location, enhancing the precision and relevance of the measurements.

Furthermore, the system is designed to allow cross-utilization of measurement data between the two camera systems. Specifically, the elastic camera system may incorporate material property data obtained from the inelastic camera system to refine, or speed up, its determination of surface roughness or defectivity or the like.

Conversely, the inelastic camera system may use geometric property data, such as roughness, obtained from the elastic camera system to improve the accuracy of, or the time required for, material property determination. This capability supports more robust and context-aware analysis, particularly in complex samples where surface and material characteristics are interdependent.

In accordance with the present disclosure, the elastic camera system is arranged for determining geometric properties of the sample. Geometric properties may refer to measurable characteristics of a surface, such as its topography, contour, or structural deviations. By detecting and evaluating these properties, the system can provide detailed information about the condition of the surface. From the obtained geometric properties, further surface-related parameters can be derived. In particular, roughness, which may reflect the fine irregularities of the surface texture, and defectivity, which relates to localized imperfections such as scratches, pits, or cracks, can be determined.

In accordance with the present disclosure, the elastic camera system is configured to determine the geometric properties of a sample within the measuring region. These geometric properties may include the surface geometry, specifically, the outer or visually perceptible layer of the sample.

The inventors have found that elastic light scattering is sensitive not only to surface geometry but also to parameters such as film thickness, surface roughness, and coating design. Consequently, the scattering of elastic light may be influenced by more than just the outermost layer of the sample. It may also depend on a very thin top layer of the material, such as the interface between the sample's base material and its coating.

Furthermore, the geometric properties of the underlying material, excluding the coating, can also affect the manner in which light is elastically scattered. This indicates that both the coating and the substrate contribute to the observed scattering behavior, thereby enabling the apparatus to extract detailed geometric information from the sample.

In one example, the depth within the material at which geometric properties influence the elastically scattered light may depend on the wavelength of the light used. Specifically, geometric features located at a depth of up to approximately one-quarter of the wavelength, i.e. λ/4, or λ/3, may still affect the scattering behavior of the elastic light. This wavelength-dependent sensitivity enables the system to detect subsurface geometric characteristics within a shallow region beneath the surface.

In an example, both the elastic and inelastic camera system are arranged to both generate an image for the measuring region in a single exposure.

In the context of the present example, stating that both the elastic and inelastic camera systems are arranged to generate an image for the measuring region in a single exposure means that each system is independently capable of capturing a complete image of the same illuminated region during one exposure event.

This does not necessarily imply that the two systems must operate simultaneously or synchronously. This example emphasizes that each camera system can acquire its respective data without requiring multiple exposures, repeated illumination, or repositioning of the sample.

The elastic camera system, for example, captures light that is elastically scattered, i.e. light that retains its original energy, and uses this to generate an image reflecting properties such as roughness or defectivity.

Meanwhile, the inelastic camera system captures light that has undergone an energy shift due to molecular interactions, allowing it to generate an image that reflects material properties such as composition or stress. The optical arrangement ensures that both types of scattered light are directed appropriately to their respective detectors.

By enabling each system to produce a full image from a single exposure, the apparatus supports efficient and spatially coherent, i.e. spatially aligned, analysis of the sample, while minimizing measurement time and avoiding artifacts that could arise from sequential or multistep acquisition processes.

Thus, in this example, both the elastic and inelastic camera systems are implemented as area-imaging cameras, rather than line-scan cameras. This means that each camera system is capable of capturing a two-dimensional image of the measuring region in a single exposure, or "one-go", without requiring mechanical scanning across the sample.

Unlike line-scan cameras, which acquire data one line at a time and rely on relative motion between the camera and the sample to build up a complete image and unlike point-wise scan cameras, which acquire data one point at a time, area-imaging cameras can record the entire field of view simultaneously. This approach significantly simplifies the optical and mechanical design, reduces acquisition time, and minimizes the risk of misalignment or motion-induced artifacts.

It also ensures that both surface-related and material-related information are spatially coherent, i.e. spatially aligned, and temporally consistent, which is particularly useful for high-precision applications where even slight deviations can affect measurement accuracy. By avoiding line-scanning, the system supports faster, more robust, and more reliable imaging of the sample region.

In an example, both the elastic and inelastic camera systems are arranged to generate respective images that spatially correspond to the same measuring region of the sample.

In a further example, the elastic camera system is arranged for using the determined material properties for spatially corresponding pixels or groups of pixels in the respective images of the measuring region and/or the inelastic camera system is arranged for using the determined geometric properties for spatially corresponding pixels or groups of pixels in the respective images of the measuring region.

The apparatus is configured such that both the elastic and inelastic camera systems are capable of generating an image of the measuring region. These images represent the spatial distribution of the respective optical signals, elastic scattering for geometric properties and inelastic scattering for material properties, across the illuminated area. Here, the determination of geometric properties, as well as the determination of material properties, is not performed at the level of the entire measuring region as a whole. In other words, it is not performed as an average of the whole imaged/illuminated region. Instead, these properties are derived from individual pixels or groups of pixels within the respective images. Each pixel or pixel group corresponds to a subregion of the measuring region, and thus the resulting image is associated with a plurality of localized measurements, each reflecting the properties at a specific spatial location.

To enable correlation between geometry and material properties, especially in cases where one set of properties is used to refine the other, it may be of importance that the data from both camera systems be spatially aligned. This means that the geometric properties values derived from the elastic camera system are to correspond to the same spatial location as the material property values derived from the inelastic camera system, and vice versa.

Since the two camera systems may differ in resolution, pixel pitch, or optical magnification, direct pixel-to-pixel correspondence cannot be assured. Therefore, the camera systems are arranged to ensure that spatially corresponding pixels or pixel groups, i.e. those that refer to the same physical location on the sample, can be identified and matched across the two images.

This spatial alignment enables accurate cross-referencing of data, allowing, for example, the elastic camera system to incorporate material property information from the inelastic image at the same location, or the inelastic camera system to account for geometry characteristics derived from the elastic image. Such alignment is of importance for high-precision analysis, particularly in applications where geometry and material properties interact or influence each other.

In a further example, the inelastic camera system is arranged for determining the refractive index, being the material properties of the sample in the measuring region. The refractive index of a material is an optical property that describes how light behaves when it enters the material from another medium, such as air or vacuum. It quantifies how much the light slows down and bends due to the change in medium.

In a specific example, the elastic camera system is arranged for using the refractive index for spatially corresponding pixels or groups of pixels in the respective images of the measuring region and/or the inelastic camera system is arranged for using the determined geometric properties for spatially corresponding pixels or groups of pixels in the respective images of the measuring region for determining the refractive index.

In an example, the measuring region is at least 0,01 mm², preferably at least 0,1 mm², more preferably at least 1 mm² and even more preferably at least 100 mm². An upper limit may be applicable, for example 10 cm², or 100 cm².

The inventors have noted that it typically takes about -multiple seconds, for example tens of seconds, for a single measurement using the inelastic camera system. As such, it is beneficial to increase the area size of the measuring region such that more of the sample is imaged in one-go. The total time for taking a single measurement would still take roughly the same time period, but much more of the area is considered in one of such image. Here, the same illumination/excitation power density may be deployed.

In an example, the sample is divided into a plurality of measuring regions, wherein the elastic camera system is arranged for using the determined material properties of the sample in the measuring region of the plurality of measuring regions in determining the geometric properties of the sample in the same measuring region of the plurality of measuring regions and/or wherein the inelastic camera system is arranged for using the determined geometric properties of the sample in the measuring region of the plurality of measuring regions in determining the material properties of the sample in the same measuring region of the plurality of measuring regions.

In another example, any of the elastic camera system is arranged for determining the geometric properties of the sample in the measuring region for each pixel, or group of pixels, of the elastic camera system and/or the inelastic camera system for determining material properties of the sample in the measuring region for each pixel, or group of pixels, of the inelastic camera system.

In yet another example, any of the elastic camera system is a scatterometry analysis camera and the inelastic camera system is a Raman analysis camera.

In yet another example, the elastic camera system and the inelastic camera system are arranged for determining the geometric properties of said sample in the measuring region and for determining material properties of the sample in the measuring region, respectively, by light simultaneously scattered, elastically and inelastically, from the sample in the measuring region.

The advantage of this particular example is that the elastic camera system and the inelastic camera system may be arranged to determine the geometric properties of the sample simultaneously with the determination of the material properties of the sample, in the measuring region. This saves valuable time.

Yet another advantage is that the measurements are not affected by dynamics on the sample surface, for example any form of contamination or the like that may amend the measurements in case when subsequent measurements were to be used.

In another example, the optics comprises a beamsplitter system for splitting light scattered from the sample towards the elastic camera and towards the inelastic camera.

The beamsplitter system may for example comprise a beamsplitter. A beamsplitter is a device or optical system designed to divide a beam of light into two or more separate paths. A beamsplitter may consist of a partially reflective surface, such as a coated glass plate or cube, that reflects a portion of the incoming light while transmitting the rest. This allows simultaneous routing of light to different detectors or optical subsystems, which is particularly useful in applications like interferometry, imaging, spectroscopy, and multi-modal sensing.

Another option is that the beamsplitter is arranged to transmit light having a certain wavelength and to reflect light having another wavelength. This could be especially useful for situations wherein an inelastic and an elastic camera system is used. Another option is a beamsplitter device which creates multiple paths, i.e. two optical paths: One for the elastically reflected light and one for the inelastically reflected light.

However, the term beamsplitter system may encompass a broader range of optical components and configurations beyond the partially reflective mirror. The beamsplitting function may, for example, be performed by a diffraction grating, which separates light based on wavelength through interference effects. Alternatively, a diffractive optical element, DOE, can be used to direct light into multiple paths with tailored phase and amplitude control. Fiber optics or waveguides may also serve as beamsplitters by channelling portions of the light into different physical paths.

In the context of the present disclosure, the beamsplitter system may be implemented using any of these technologies or a combination thereof. The choice depends on factors like spectral range, spatial resolution, switching speed, and system architecture. Regardless of the specific implementation, the core function remains the same: to direct portions of the scattered light, whether elastic or inelastic, toward the appropriate detection channels, enabling parallel or sequential analysis of different optical phenomena from the same illuminated region, i.e. the measuring region.

In an example, the optics comprise a lens and/or a mirror for guiding both said light elastically and inelastically scattered from the sample in the measuring region to the elastic camera system and the inelastic camera system, respectively.

In yet another example, the optics further comprises a filter system for filtering out said elastic scattered light from the sample in the measuring region for providing said inelastically scattered from the sample in the measuring region to the inelastic camera system.

The filter system preferably comprises an Optical thin-film filter or an interference filter. The filter system may also comprise grating, or diffractive optics. The filter system may further comprise a tunable-filter e.g. like liquid crystal tunable filter, acousto-optic tunable filter, MEMS based optical filters.

The elastic camera system and the inelastic camera system may be embodied in one camera system. For example, one camera system can be deployed that uses different illumination wavelengths, and a common filter system, for which one of the illumination wavelengths is elastic and another illumination wavelength is inelastic. The one camera system may be deployed with a tunable or adjustable filter system that is kept in the beam path, where the transmitted wavelengths can be switched to either contain

In yet another example, the elastic camera system and said inelastic camera system are embodied in one camera system, said apparatus further comprises a filter handling device arranged for inserting said filter during said inelastic camera system capturing said inelastically scattered light, and for removing said filter during said elastic camera system capturing said elastically scattered light.

In yet another example, the elastic camera system and the inelastic camera system have the same resolution.

In yet another example, the illumination device is arranged for illuminating the measuring region of the sample with light having different wavelengths.

In a further example, the illumination device comprises two light sources, wherein the two light sources being arranged to provide light with different wavelengths.

In an even further example, the illumination device comprises a tunable light source for providing light with a tunable wavelength.

In yet another example, the sample is any of a substate table, an electrostatic clamp, a reticle stage or a mirror used in an exposure apparatus arranged to expose a pattern onto a substrate.

In an example, the exposure apparatus is a lithographic apparatus, wherein the lithographic apparatus further comprises an illumination system configured to condition a radiation beam, a support structure constructed to support a patterning device, the patterning device being capable of imparting the radiation beam with a pattern in its cross-section to form a patterned radiation beam, and a projection system configured to project the patterned radiation beam onto the substrate.

A lithographic apparatus is a machine constructed to apply a desired pattern onto a substrate. A lithographic apparatus can be used, for example, in the manufacture of integrated circuits (ICs). A lithographic apparatus may, for example, project a pattern at a patterning device (e.g., a mask) onto a layer of radiation-sensitive material (resist) provided on a substrate

In a lithographic apparatus, an object such as a substrate to be exposed is held on a substrate table (sometimes referred to as a wafer table). The substrate table may be moveable with respect to the projection system. The substrate table usually comprises a solid body made of a rigid material and having similar dimensions in plan to the substrate to be supported. The substrate-facing surface of the solid body is provided with multiple projections (referred to as burls). The distal surfaces of the burls conform to a flat plane and support the substrate. The burls provide several advantages: a contaminant particle on the substrate table or on the substrate is likely to fall between burls and therefore does not cause a deformation of the substrate; it is easier to machine the burls so their ends conform to a plane than to make the surface of the solid body flat; and the properties of the burls can be adjusted, e.g., to control the clamping of the substrate.

In accordance with the present disclosure, the sample may be such a substrate table. The measuring region may comprise one or multiple burls.

In an example, the measuring region thus corresponds to at least a part of a burl of said substrate table, wherein said burl is arranged for receiving a substrate and/or for supporting the substrate table on a support body.

In another example, the material properties of the sample to be investigated comprise any of material composition of the sample in the measuring region, contamination of the sample in the measuring region and mechanical/structural properties of the sample in the measuring region.

In a second aspect of the present disclosure, there is provided a method for determining geometric properties and for determining material properties of a sample to be investigated using an apparatus in accordance with any of the previous claims. The method comprises the steps of illuminating, by the illumination device, the measuring region of the sample, determining, by the elastic camera system, geometric properties of said sample in the measuring region by capturing light elastically scattered from the sample in the measuring region, determining, by the inelastic camera system, material properties of the sample in the measuring region by capturing light inelastically scattered from the sample in the measuring region, and guiding, by the optics, light elastically and inelastically scattered from the sample in the measuring region to the elastic camera system and the inelastic camera system, respectively.

Here, the step of determining the geometric properties comprises using the determined material properties of the sample in the measuring region in determining the geometric properties of the sample in the measuring region and/or the step of determining the material properties using the determined geometric properties of the sample in the measuring region in determining the material properties of the sample in the measuring region.

It is noted that the advantages as explained with reference to the first aspect of the present disclosure, being the apparatus configured for determining a geometric properties and for determining material properties of a same measuring region of a sample to be investigated are also applicable to the second aspect of the present disclosure, being the corresponding method.

### BRIEF DESCRIPTION OF THE DRAWINGS

Examples of the present disclosure will now be described, by way of example only, with reference to the accompanying schematic drawings, in which:
- Figure 1 shows a lithographic system comprising a radiation source and a lithographic apparatus in accordance with the present disclosure;
- Figure 2a shows a schematic depiction of a sample to be investigated, being a substrate table, in accordance with the present disclosure;
- Figure 2b shows a top view of the surface of the substrate table in accordance with the present disclosure;
- Figure 3 discloses an example of a measurement apparatus in accordance with the present disclosure;
- Figure 4 discloses another example of a measurement apparatus in accordance with the present disclosure;
- Figure 5 discloses a Raman spectra of a wafer table diamond coating measured at different positions;
- Figure 6 discloses an example of a flow chart in accordance with the present disclosure.

### DETAILED DESCRIPTION

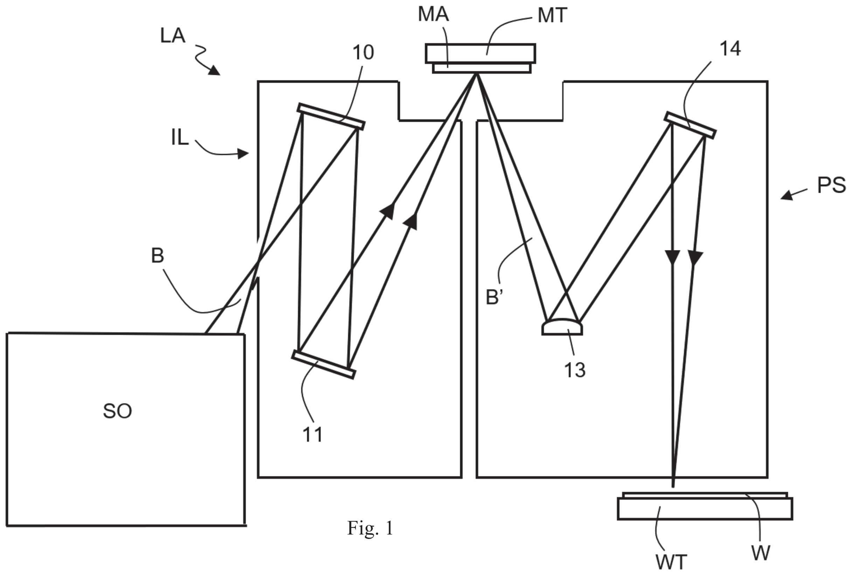

Figure 1 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The facetted field mirror device 10 and facetted pupil mirror device 11 together provide the EUV radiation beam B with a desired cross-sectional shape and a desired intensity distribution. The illumination system IL may include other mirrors or devices in addition to, or instead of, the faceted field mirror device 10 and facetted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13,14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13,14 in Figure 1, the projection system PS may include a different number of mirrors (e.g. six or eight mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO may be a laser produced plasma (LPP) source, a discharge produced plasma (DPP) source, a free electron laser (FEL) or any other radiation source that is capable of generating EUV radiation.

The substrate table, WT, may have a plurality of burls projecting from a main body surface, wherein each burl has a burl side surface and a distal end surface, wherein the distal end surface is configured to engage with a substrate and the distal end surfaces of the burls substantially conform to a support plane and are configured for supporting a substrate.

The present disclosure is directed to an apparatus configured for determining geometric properties and for determining material properties of a same measuring region of a sample to be investigated. The sample may be a substrate table, or may comprise one or multiple burls of a substrate table. A measuring region is, for example, a single burl or is a plurality of burls.

One of the aspects of the present disclosure is to measure the roughness of the burls and to measure the material properties of the coating present on the burls. The roughness may be of importance as this adds to reducing any relative lateral movement between the substrate table and the substrate that is held on top of the substrate table, i.e. on top of the burls.

Although specific reference may be made in this text to examples of the disclosure in the context of a lithographic apparatus, examples of the disclosure may be used in other apparatus. Examples of the disclosure may form part of a mask inspection apparatus, a metrology apparatus, or any apparatus that measures or processes an object such as a wafer (or other substrate). These apparatuses may be generally referred to as lithographic tools. Such a lithographic tool may use vacuum conditions or ambient (non-vacuum) conditions.

Where the context allows, examples of the present disclosure may be implemented in hardware, firmware, software, or any combination thereof. Examples of the disclosure may also be implemented as instructions stored on a machine-readable medium, which may be read and executed by one or more processors.

A machine-readable medium may include any mechanism for storing or transmitting information in a form readable by a machine (e.g., a computing device). For example, a machine-readable medium may include read only memory (ROM); random access memory (RAM); magnetic storage media; optical storage media; flash memory devices; electrical, optical, acoustical or other forms of propagated signals (e.g. carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc. and in doing that may cause actuators or other devices to interact with the physical world.

In accordance with the present disclosure, there is provided an apparatus designed to measure a sample, for example the burls present on the substrate table. In addition, the substrate table may form part of an exposure apparatus used to pattern the substrate / wafer, such as a lithography system employing a mask (e.g., EUV or DUV lithography) or a maskless system, such as one utilizing an ion beam. The present application is applicable for any of these applications.

Figure 1 has been described with reference to an EUV based lithographic system. However, it will be understood that the present disclosure is not limited to EUV systems and is equally applicable to other types of lithographic systems, such as Deep Ultraviolet, DUV, based lithographic systems. While EUV systems use radiation with a wavelength of approximately 13.5 nanometers and require a vacuum environment due to the strong absorption of EUV light in air, DUV systems typically use radiation with longer wavelengths and can operate in an atmospheric environment.

DUV lithography often employs transmissive optics and quartz-based masks, whereas EUV lithography relies on reflective optics and multi-layer mirrors due to the high absorption of EUV radiation in most materials. Despite these differences, the methods and apparatuses described herein, particularly those concerning the substrate table, may be employed in both EUV and DUV lithographic systems.

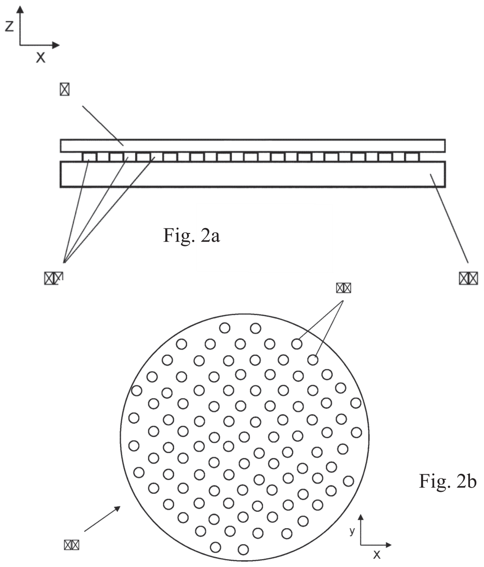

Figure 2A is a schematic depiction of a substrate table, in accordance with an example. Figure 2B is a top view of the surface of the substrate table, in accordance with an example. In this example, the substrate table WT supports an object such as a substrate W. As shown, the substrate table WT is configured to provide one or more support surfaces to directly contact and support the substrate W. In some examples, the substrate table WT has one or more projections 20 (e.g., burls or protrusions) protruding or extending substantially perpendicularly from a surface of the substrate table WT. For example, more than 10,000 (e.g., 20,000, 30,000 or other number) burls may be provided on top of the substrate table WT. These projections 20 are considered to be the first plurality of burls, i.e. the ones that hold the substrate during use.

Accordingly, in this situation, the substrate table WT may be referred to as a pimple table or a burl table. In particular, during operation, a lower surface or backside of the substrate W may be supported on upper face(s) of the one or more burls 20. Thus, the top(s) of the one or more burls define an effective support plane for the substrate W.

The substrate table WT is configured such that, when the substrate W is positioned on the substrate table WT, i.e., at least on the one or more burls 20, an upper surface of the substrate W lies in a predetermined plane in relation to a propagation direction of the exposure radiation. In an example, the surface of the substrate W is oriented transverse to the propagation direction of the beam.

The arrangement of one or more burls 20 is not limiting. In some embodiments, the burls are arranged in an array, such as shown in the top view of the table surface in Figure 2B. Also, the surface area of the substrate table WT or its burls that are in contact with the substrate W is not intended to be limiting. The above-described arrangement of the burls 20 may minimize or reduce the total area of the substrate W in contact with the substrate table WT and so generally may reduce the overall number of contaminants between the substrate W and a corresponding surface of the substrate table WT contacting the substrate W.

The substrate table may further comprise a second plurality of burls that extend from the bottom surface of the substrate table. The second plurality of burls are used for supporting the substrate table on a support body. The support body is typically moved in a lateral direction, i.e. X and Y direction, during operation.

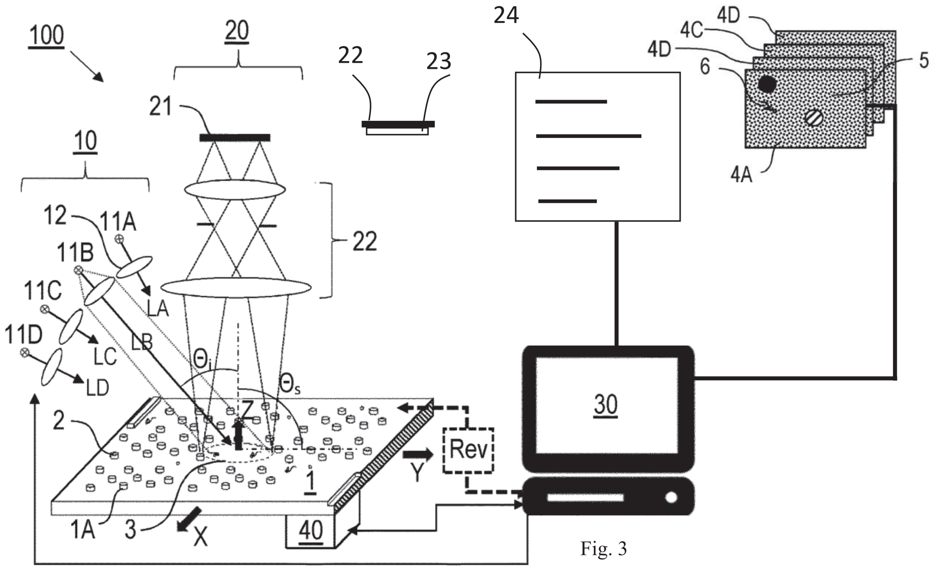

Figure 3 schematically shows an apparatus 100 in accordance with the present disclosure. The apparatus 100 is arranged to measure a sample, i.e. an electrostatic clamp in this particular case, ESC 1. The apparatus comprises an illumination device 10, a elastic camera device 20 comprising a camera, an evaluation device 30 , and a sample holder 40 . The configuration of the evaluation device 30 and the method performed by the evaluation device 30 are elaborated in detail with reference to the flow chart.

The evaluation device 30 may comprise a computer unit which is configured for executing data processing programmes for processing scattered light image data recorded by the detector device 20.

An inelastic camera device, indicated with reference numerals 22 and 23, is present, which inelastic camera device 22, 23, is arranged to measure, or capture, light that is inelastically scattered from the ESC 1. Such an inelastic camera device is, for example, a Raman camera. Reference numeral 23 may indicate a filter for, for example, filtering the wavelengths of the received signal and reference numeral 22 may indicate the actual sensor. The inelastic camera device is also connected to the evaluation device 30.

The evaluation device 30 is preferably also provided with a control unit for controlling the apparatus 100. Alternatively or in addition, in order to control the apparatus 100, an additional control unit (not shown) can be provided separately from the evaluation device 30.

The ESC 1 is in the shape of a plane plate, on the surface of which a plurality of burls 1 A, each having an end face 2, is arranged. The ESC 1 is shown schematically, in a detail view, having just a few burls 1 A. In practice, for example a dense arrangement of several tens of thousands of burls 1 A at spacings of less than 3000 µm is provided, the end faces 2 of which burls each have a diameter of less than 0.5 mm and span the carrier surface of the ESC 1 for a wafer.

The ESC 1 extends in a reference plane (here: X-Y plane), and the surface normal of the ESC 1 extends perpendicularly to the reference plane (here: Z-direction). The end faces 2 are preferably located in a common plane in parallel with the reference plane. The depth of focus and the axial chromatic aberration of the camera preferably allows for sharp imaging in both planes and at different wavelengths simultaneously, or it is possible to record the planes simultaneously and sharply using the camera, by means of refocussing. Optionally, the topography and/or local variations in height of the surface of the ESC 1 can be detected for example by a focus variation measurement and/or a Makyoh imaging measurement.

The ESC 1 is arranged on the sample holder 40 (shown schematically), which comprises for example an xy-stage for holding and moving the ESC in the X-Y plane. The position of the ESC 1 relative to the illumination device 10 and the detector device 20, and in particular the measuring region 3 illuminated by the illumination device 10 , within the overall surface of the ESC 1, can be set by means of the sample holder 40.

The illumination device 10 may comprise a group of light sources 11 A, 11 B, 11 C, 11D which each comprise a light-emitting diode. The light sources 11 A, 11 B, 11 C, 11 D are fastened on a common carrier and/or housing (not shown) and each provided with an illumination optic (collimation optic) 12 . It is optionally possible for at least one light source, and preferably all the light sources, to be provided with a displaceable reducer, such as a grey filter. The reducers can be retracted and extended in the beam paths of the respective light sources, in order to increase the dynamic of the measurement.

The illumination device 10 provided is merely an example. It is noted that the apparatus 100 in accordance with the present disclosure may also work with just a single illumination source. Or an illumination source that is able to provide different wavelengths, or an illumination source that comprises a tuneable laser for providing different wavelengths, etc.

The illumination optic 12 of the light sources 11 A, 11 B, 11 C, 11 D each comprises a collimation lens for forming a collimated illumination beam path LA, LB, LC and LD towards the ESC 1 . The light sources 11 A, 11 B, 11 C, 11 D and the associated illumination optics 12 are arranged so as to be fixed in such a way that each of the illumination beam paths LA, LB, LC and LD forms a different angle of incidence θi, relative to the surface normal of the surface of the ESC 1 , and is directed to the common measuring region 3.

On account of the illumination optics 12 used, the illumination in the illumination beam paths LA, LB, LC and LD is typically round or elliptical, and larger than the measuring region 3 considered. The measuring region 3 is for example of a rectangular or quadratic shape, which is adapted to the shape of the detectors 21 and 22, wherein the measuring region 3 in particular has a side length in the range of from 0.1 cm to 10 cm.

The detectors 21 and 22, such as a CMOS matrices, may comprise a plurality of detector pixels for spatially resolved recording of scattered light, elastic and inelastic, in the event of illumination of the measuring region 3 along the illumination beam paths LA, LB, LC and LD. Output signals of the detector array 21 are a plurality of scattered light images 4 A, 4 B, 4 C, 4D, . . . of the same measuring region 3 , the number of which images, in the embodiment involving time control of the illumination device, being at least identical to the number of light sources.

Upon recording of illumination series, e.g. in order to increase the reliability of the identification of deterministic structures or defects, the number of scattered light images 4 A, 4 B, 4 C, 4 D is preferably the same as a whole-number multiple of the number of light sources. Illumination series can be configured for example having different integration times, in order to increase the dynamics and thus for example obtain HDR (high-dynamicrange) images. The scattered light images 4 A, 4 B, 4 C, 4 D are delivered to the evaluation device 30, by means of which the method for determining geometric properties and for determining material properties of a same measuring region, is carried out.

The images 4A, 4C, 4D, are obtained using the elastic camera device 20. These images are used for determining geometric properties of the sample at the measuring region. One image may comprise a plurality, for example thousands, of such determined parameters, i.e. for each small subregion 5, 6 of the image.

The material properties 24 are determined by the inelastic camera system 22, 23. The spatial distribution of the determined material properties align with the spatial distribution of the determined geometric properties by the elastic camera system. Further, the results of the inelastic camera system 22, 23 may be used for improving, in accuracy and/or speed, the results of the elastic camera system 22, 23, or vice versa.

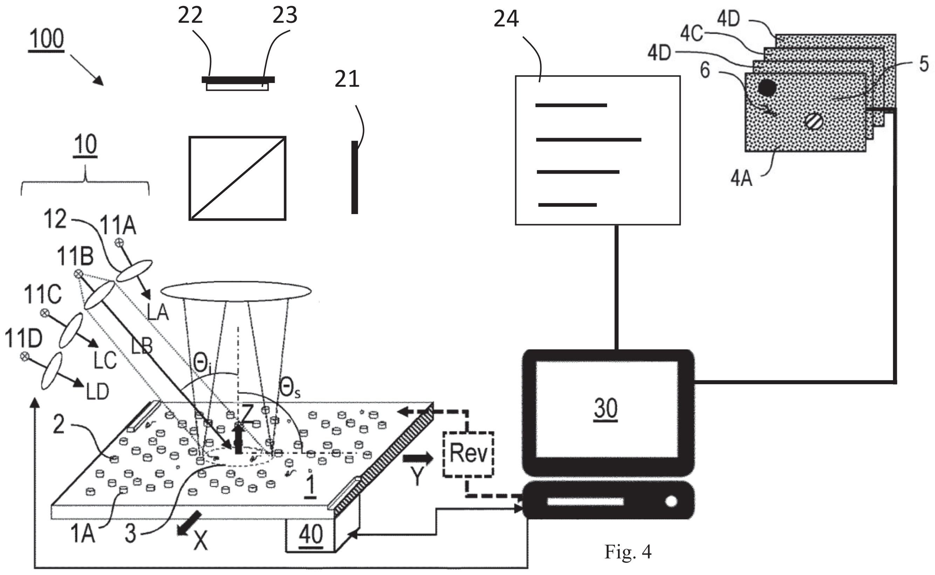

Figure 4 discloses an alternative of the apparatus 100 shown in figure 3 Here, the measurements made by the elastic camera system 21 and the inelastic camera system 22, 23 may be performed simultaneously. This may be accomplished by introducing a beamsplitter, such that the scattered light from the sample is directed towards the elastic camera system 21 as well as the inelastic camera system 22, 23.

To improve the interpretation of inelastic spectroscopy, i.e. Raman spectroscopy, in the presence of roughness, and vice versa, a combination of qualitative and quantitative approaches can be employed.

Qualitatively, observing how Raman signals change in parallel with scatterometry data can help identify unreliable roughness measurements. For instance, if Raman spectra show anomalies that correlate with specific scatterometry patterns, those data points may need to be flagged or treated with caution.

Quantitatively, corrections can be made using calibration samples that have been characterized with high-precision metrologies. For roughness, techniques like white light interferometry or atomic force microscopy, AFM, can provide ground-truth values. For Raman data, complementary methods such as FTIR, SEM/EDX, or XPS can offer deeper insights into material composition. These datasets can be used to train AI models that correlate and correct Raman and roughness data without requiring complex physical modelling.

From a modelling perspective, Raman spectra can be derived using density functional theory, DFT, which simulates the electronic structure of materials. Roughness affects Raman signals through several mechanisms.

Local field enhancement, additional Phononic mode contributions and Stress or strain induction. These effects can be incorporated into DFT models. Stress and strain are relatively straightforward to model, while field enhancement and phononic effects require perturbation theory, DFPT. By integrating roughness data, i.e. from scatterometry, into these models, it is possible to predict and compensate for distortions in Raman spectra. This enables more accurate material characterization, independent of roughness. A practical example is the determination of the diamond-to-graphite ratio in coatings, where roughness can distort the Raman bands associated with sp² and sp³ carbon. Correcting for these distortions may be of importance for reliable quantification.

Conversely, Raman analysis can enhance the interpretation of roughness data obtained via scatterometry. Scatterometry models often rely on first-order vector perturbation theory and may require inputs such as the complex refractive index of the surface material, thin-film structure, and illumination parameters. Raman spectroscopy can provide precise material information, which may improve the accuracy of these models.

For example, knowing the material composition of a contamination layer from Raman data allows for better modelling of thin-film effects in scatterometry. Additionally, Raman-derived refractive index data can be used in particle scattering models like Mie theory or the Bobbert-Vlieger model, further refining roughness interpretation.

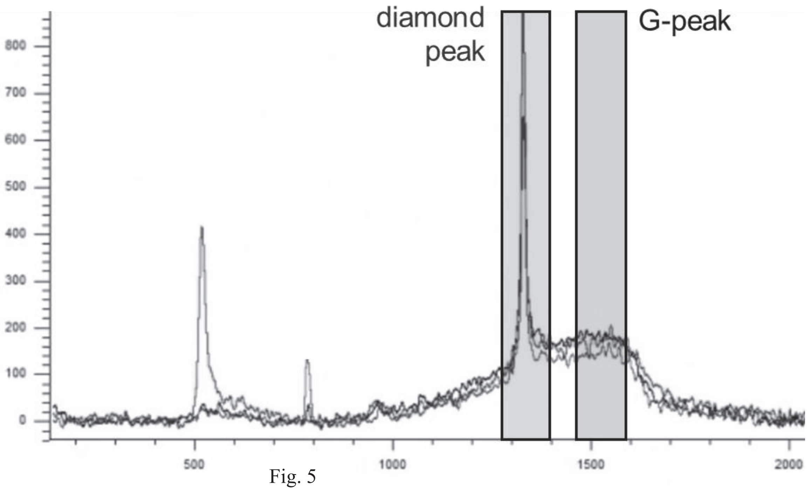

Figure 5 discloses a Raman spectra of a wafer table diamond coating measured at different positions. A Raman spectra of a Wafer Table, WT, diamond coating is illustrated at various positions to reflect the material's properties. Two specific features in the spectra, i.e. the diamond peak and the G-peak, are may be of importance because they reveal details about the carbon structure, such as the ratio of diamond-like (sp³) to graphitic/amorphous (sp²) carbon. To focus on these features, the measurement setup may, preferably, need to be tuned, for example the illumination wavelengths and the band-pass filter placed in front of the camera.

A particular setup could use a camera filter that allows light around 572.7 nm to pass through, while illuminating the sample with lasers at 532 nm and 526.5 nm. This combination helps isolate the Raman signals of interest. Alternatively, a setup using blue light, for example with illumination wavelengths at 449 nm and 445 nm, can be paired with a camera filter centered around 477.6 nm. These blue wavelengths are suitable for high-resolution Raman measurements and can be efficiently generated using high-power LEDs equipped with spectral band-pass filters. This approach offers a flexible and powerful way to enhance the visibility of key Raman features, improving the accuracy and consistency of the analysis across different positions on the wafer table / sample.

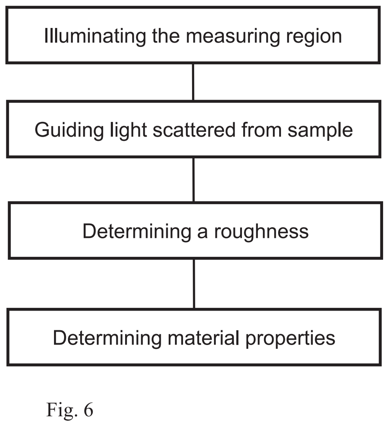

Figure 6 discloses an example of a flow chart in accordance with the present disclosure.

Here, a method is disclosed for determining geometric properties and for determining material properties of a sample to be investigated using an apparatus in accordance with any of the previous claims.

The method comprises the steps of illuminating, by the illumination device, the measuring region of the sample, guiding, by the optics, light elastically and inelastically scattered from the sample in the measuring region to the elastic camera system and the inelastic camera system, respectively, determining, by the elastic camera system, geometric properties of said sample in the measuring region by capturing light elastically scattered from the sample in the measuring region and determining, by the inelastic camera system, material properties of the sample in the measuring region by capturing light inelastically scattered from the sample in the measuring region.

The step of determining the geometric properties comprises uses the determined material properties of the sample in the measuring region in determining the geometric properties of the sample in the measuring region.

Alternatively, or on top of that, the step of determining the material properties uses the determined geometric properties of the sample in the measuring region in determining the material properties of the sample in the measuring region.

While the concepts disclosed herein may be used for imaging on a substrate such as a silicon wafer, it shall be understood that the disclosed concepts may be used with any type of lithographic imaging systems, e.g., those used for imaging on substrates other than silicon wafers.

Aspects of the invention can be implemented in any convenient form. For example, an embodiment may be implemented by one or more appropriate computer programs which may be carried on an appropriate carrier medium which may be a tangible carrier medium (e.g., a disk) or an intangible carrier medium (e.g., a communications signal). Embodiments of the invention may be implemented using suitable apparatus which may specifically take the form of a programmable computer running a computer program arranged to implement a method as described herein. Thus, embodiments of the disclosure may be implemented in hardware, firmware, software, or any combination thereof. Embodiments of the disclosure may also be implemented as instructions stored on a machine-readable medium, which may be read and executed by one or more processors. A machine-readable medium may include any mechanism for storing or transmitting information in a form readable by a machine (e.g., a computing device). For example, a machine -readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

In block diagrams, illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium. In some cases, third party content delivery networks may host some or all of the information conveyed over networks, in which case, to the extent information (e.g., content) is said to be supplied or otherwise provided, the information may be provided by sending instructions to retrieve that information from a content delivery network.

Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

Rather than separating those inventions into multiple isolated patent applications, these inventions have been grouped into a single document because their related subject matter lends itself to economies in the application process. But the distinct advantages and aspects of such inventions should not be conflated. In some cases, embodiments address all of the deficiencies noted herein, but it should be understood that the inventions are independently useful, and some embodiments address only a subset of such problems or offer other, unmentioned benefits that will be apparent to those of skill in the art reviewing the present disclosure. Due to cost constraints, some inventions disclosed herein may not be presently claimed and may be claimed in later filings, such as continuation applications or by amending the present claims. Similarly, due to space constraints, neither the Abstract nor the Summary sections of the present document should be taken as containing a comprehensive listing of all such inventions or all aspects of such inventions.

It should be understood that the description and the drawings are not intended to limit the present disclosure to the particular form disclosed, but to the contrary, the intention is to cover all modifications, equivalents, and alternatives falling within the spirit and scope of the inventions as defined by the appended claims.

Modifications and alternative embodiments of various aspects of the inventions will be apparent to those skilled in the art in view of this description. Accordingly, this description and the drawings are to be construed as illustrative only and are for the purpose of teaching those skilled in the art the general manner of carrying out the inventions. It is to be understood that the forms of the inventions shown and described herein are to be taken as examples of embodiments. Elements and materials may be substituted for those illustrated and described herein, parts and processes may be reversed or omitted, certain features may be utilized independently, and embodiments or features of embodiments may be combined, all as would be apparent to one skilled in the art after having the benefit of this description. Changes may be made in the elements described herein without departing from the spirit and scope of the invention as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used throughout this application, the singular forms "a," "an," and "the" include plural referents unless the content explicitly indicates otherwise. Thus, for example, reference to "an" element or "a" element includes a combination of two or more elements, notwithstanding use of other terms and phrases for one or more elements, such as "one or more." As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Statements in which a plurality of attributes or functions are mapped to a plurality of objects (e.g., one or more processors performing steps A, B, C, and D) encompasses both all such attributes or functions being mapped to all such objects and subsets of the attributes or functions being mapped to subsets of the attributes or functions (e.g., both all processors each performing steps A-D, and a case in which processor 1 performs step A, processor 2 performs step B and part of step C, and processor 3 performs part of step C and step D), unless otherwise indicated. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. References to selection from a range includes the end points of the range.

In the above description, any processes, descriptions or blocks in flowcharts should be understood as representing modules, segments or portions of code which include one or more executable instructions for implementing specific logical functions or steps in the process, and alternate implementations are included within the scope of the exemplary embodiments of the present advancements in which functions can be executed out of order from that shown or discussed, including substantially concurrently or in reverse order, depending upon the functionality involved, as would be understood by those skilled in the art.

While certain embodiments have been described, these embodiments have been presented by way of example only, and are not intended to limit the scope of the present disclosures. Indeed, the novel methods, apparatuses and systems described herein can be embodied in a variety of other forms; furthermore, various omissions, substitutions and changes in the form of the methods, apparatuses and systems described herein can be made without departing from the spirit of the present disclosures. The accompanying claims and their equivalents are intended to cover such forms or modifications as would fall within the scope and spirit of the present disclosures.

## Claims

1. An apparatus configured for determining geometric properties and for determining material properties of a same measuring region of a sample to be investigated, the apparatus comprising:
- an illumination device arranged for illuminating a measuring region of the sample,
- an elastic camera system for determining the geometric properties of said sample in the measuring region by capturing light elastically scattered from the sample in the measuring region;
- an inelastic camera system for determining material properties of the sample in the measuring region by capturing light inelastically scattered from the sample in the measuring region;
- optics arranged to guide light elastically and inelastically scattered from the sample in the measuring region to the elastic camera system and the inelastic camera system, respectively;
wherein the elastic camera system is arranged for using the determined material properties of the sample in the measuring region in determining the geometric properties of the sample in the same measuring region and/or
wherein the inelastic camera system is arranged for using the determined geometric properties of the sample in the measuring region in determining the material properties of the sample in the same measuring region.

2. An apparatus in accordance with claim 1, wherein both the elastic and inelastic camera system are arranged to both generate an image for the measuring region in a single exposure.

3. An apparatus in accordance with any of the previous claims, wherein both the elastic and inelastic camera systems are arranged to generate respective images that spatially correspond to the same measuring region of the sample.

4. An apparatus in accordance with any of the previous claims, wherein any of:
- the elastic camera system is arranged for using the determined material properties for spatially corresponding pixels or groups of pixels in the respective images of the measuring region;
- the inelastic camera system is arranged for using the determined geometric properties for spatially corresponding pixels or groups of pixels in the respective images of the measuring region.

5. An apparatus in accordance with any of the previous claims, wherein the inelastic camera system is arranged for determining the refractive index, being the material properties of the sample in the measuring region.

6. An apparatus in accordance with claim 5, wherein any of:
- the elastic camera system is arranged for using the refractive index for spatially corresponding pixels or groups of pixels in the respective images of the measuring region;
- the inelastic camera system is arranged for using the determined geometric properties for spatially corresponding pixels or groups of pixels in the respective images of the measuring region for determining the refractive index.

7. An apparatus in accordance with any of the previous claims, wherein the measuring region is at least 0,01 mm², preferably at least 0,1 mm², more preferably at least 1 mm² and even more preferably at least 100 mm².

8. An apparatus in accordance with any of the previous claims, wherein the sample is divided into a plurality of measuring regions, wherein any of:
- the elastic camera system is arranged for using the determined material properties of the sample in the measuring region of the plurality of measuring regions in determining the geometric properties of the sample in the same measuring region of the plurality of measuring regions;
- wherein the inelastic camera system is arranged for using the determined geometric properties of the sample in the measuring region of the plurality of measuring regions in determining the material properties of the sample in the same measuring region of the plurality of measuring regions.

9. An apparatus in accordance with any of the previous claims, wherein any of:
- the elastic camera system is arranged for determining the geometric properties of the sample in the measuring region for each pixel, or group of pixels, of the elastic camera system;
- the inelastic camera system for determining material properties of the sample in the measuring region for each pixel, or group of pixels, of the inelastic camera system.

10. An apparatus in accordance with any of the previous claims, wherein any of:
- the elastic camera system is a scatterometry analysis camera;
- the inelastic camera system is a Raman analysis camera.

11. An apparatus in accordance with any of the previous claims, wherein the elastic camera system and the inelastic camera system are arranged for determining the geometric properties of said sample in the measuring region and for determining material properties of the sample in the measuring region, respectively, by light simultaneously scattered, elastically and inelastically, from the sample in the measuring region.

12. An apparatus in accordance with any of the previous claims, wherein the optics comprises a beamsplitter system for splitting light scattered from the sample towards the elastic camera and towards the inelastic camera.

13. An apparatus in accordance with any of the previous claims, wherein the optics comprise a lens and/or a mirror for guiding both said light elastically and inelastically scattered from the sample in the measuring region to the elastic camera system and the inelastic camera system, respectively.

14. An apparatus in accordance with any of the previous claims, wherein said optics further comprises a filter system for filtering out said elastic scattered light from the sample in the measuring region for providing said inelastically scattered from the sample in the measuring region to the inelastic camera system.

15. An apparatus in accordance with claim 14, wherein said elastic camera system and said inelastic camera system are embodied in one camera system, said apparatus further comprises a filter handling device arranged for:
- inserting said filter during said inelastic camera system capturing said inelastically scattered light, and for
- removing said filter during said elastic camera system capturing said elastically scattered light.

16. An apparatus in accordance with any of the previous claims, wherein the elastic camera system and the inelastic camera system have a same resolution.

17. An apparatus in accordance with any of the previous claims, wherein the illumination device is arranged for illuminating the measuring region of the sample with light having different wavelengths.

18. An apparatus in accordance with claim 17, wherein the illumination device comprises two light sources, wherein the two light sources being arranged to provide light with different wavelengths.

19. An apparatus in accordance with any of the clams 17 - 18, wherein the illumination device comprises a tunable light source for providing light with a tunable wavelength.

20. An apparatus in accordance with any of the previous claims, wherein the sample is any of a substate table, an electrostatic clamp, a reticle stage or a mirror used in an exposure apparatus arranged to expose a pattern onto a substrate.

21. An apparatus in accordance with claim 20, wherein the measuring region corresponds to at least a part of a burl of said substrate table, wherein said burl is arranged for receiving a substrate and/or for supporting the substrate table on a support body.

22. An apparatus in accordance with any of the previous claims, wherein material properties of the sample to be investigated comprise any of:
- material composition of the sample in the measuring region;
- contamination of the sample in the measuring region;
- mechanical/structural properties of the sample in the measuring region.

23. A method for determining geometric properties and for determining material properties of a sample to be investigated using an apparatus in accordance with any of the previous claims, wherein the method comprises the steps of:
- illuminating, by the illumination device, the measuring region of the sample;
- guiding, by the optics, light elastically and inelastically scattered from the sample in the measuring region to the elastic camera system and the inelastic camera system, respectively;
- determining, by the elastic camera system, geometric properties of said sample in the measuring region by capturing light elastically scattered from the sample in the measuring region;
- determining, by the inelastic camera system, material properties of the sample in the measuring region by capturing light inelastically scattered from the sample in the measuring region;
wherein the step of determining the geometric properties comprises using the determined material properties of the sample in the measuring region in determining the geometric properties of the sample in the measuring region and/or
wherein the step of determining the material properties using the determined geometric properties of the sample in the measuring region in determining the material properties of the sample in the measuring region.
